# EUROPÄISCHE PATENTSCHRIFT

(11) **EP 3 178 603 B1**
(45) Veröffentlichungstag und Bekanntmachung des Hinweises auf die Patenterteilung: **11.04.2018**
(21) Anmeldenummer: 15198279.0
(22) Anmeldetag: 07.12.2015
(51) Int. Cl.: B23B 29/26

(54) **VORRICHTUNG ZUR HALTERUNG VON WERKZEUGEN**
HOLDING DEVICE FOR TOOLS
DISPOSITIF DESTINE A LA FIXATION D'OUTILS

(43) Veröffentlichungstag der Anmeldung: 14.06.2017
(73) Patentinhaber: Göltenbodt Präzisionswerkzeug- und Maschinenfabrik GmbH & Co., 71229 Leonberg (DE)
(72) Erfinder:
(74) Vertreter: Jakelski & Althoff Patentanwälte PartG mbB

(56) Entgegenhaltungen:
- DE-U1- 20 020 618
- DE-U1-202009 015 318

## Beschreibung

Die vorliegende Erfindung betrifft eine Vorrichtung zur Halterung von Werkzeugen für Bearbeitungsmaschinen.

### Stand der Technik

Spanabhebende Bearbeitungsmaschinen, wie beispielsweise Mehrspindelmaschinen oder Langdrehmaschinen, weisen Wechselhalter für ihre jeweiligen Bearbeitungswerkzeuge, wie beispielsweise Drehmeisel, auf. Die Wechselhalter sind in hochgenauer Position in einem Grundhalter fixiert. Beispielsweise können die Wechselhalter je nach Bearbeitungswerkzeug oder zu bearbeitenden Werkstück auf Führungen gegen einen verstellbaren Anschlag positioniert werden, um sie in verschiedene Relativpositionen zu bringen. Dies kann durch Hochpräzisionsführungen gewährleistet werden, die beim Wechselhalter beispielsweise in einer Halbrundform präzisionsbearbeitete schienenartige Führungsvorsprünge darstellen, welche in entsprechende präzisionsbearbeitete, ebenfalls halbrundförmige Gleitnuten am jeweiligen Grundhalter eingreifen. Hierdurch lässt sich der Wechselhalter entlang des Grundhalters verschieben, während für die Präzisionsbewegung der ineinandergreifenden Gleitvorsprünge und Gleitnuten der Abstand zwischen dem Werkzeug und dem Werkstück sicher gewahrt bleibt.

Bei Verwendung von spanabhebenden Bearbeitungsmaschinen wird das Werkstück bzw. die Werkzeugschneide im Bereich des jeweils ansetzenden Werkzeugs mittels eines Kühlmittels gekühlt. Das Kühlmittel kann über einem Außenbereich des Grundhalters und des Wechselhalters angeordnete Kühlmittelleitungen zu dem Werkzeug hin geführt werden.

In der DE 20 2009 015 318 U1 wird eine Vorrichtung für Bearbeitungsmaschinen zum Umrüsten auf andere Werkzeuge und zur Voreinstellung der Werkzeuge beschrieben. Diese Vorrichtung ermöglicht einen Schnellwechsel von Werkzeugen, indem ein mit einem Werkzeug versehener Wechselhalter auf einem Grundhalter ausgetauscht wird. Im Grundhalter und im Wechselhalter verlaufen Kühlmittelkanäle, wobei im montierten Zustand der Grundhalter und der Werkzeughalter fluidisch miteinander verbunden sind. Hierzu sind am Grundhalter mehrere Kühlmittelauslassöffnungen vorgesehen. Mindestens eine dieser Öffnungen ist im montierten Zustand fluidisch mit einer Kühlmitteleinlassöffnung eines Werkzeughalters verbunden. Die übrigen Öffnungen müssen mit Verschlussstopfen verschlossen werden.

Aus der DE 200 20 618 U1 ist eine Vorrichtung zur Halterung von Bearbeitungswerkzeugen für spanabhebende Bearbeitungsmaschinen bekannt, welche im Grundhalter und im Wechselhalter verlaufende Kühlmittelkanäle vorsieht. Die Übergabe des Kühlmittels vom Grundhalter auf den Wechselhalter erfolgt im Bereich der Gleitvorsprünge und Gleitnuten. In diesen sind jeweils Öffnungen vorgesehen, die mit den Kühlmittelkanälen verbunden sind. Beim Anbringen des Wechselhalters am Grundhalter werden diese Öffnungen zur Deckung gebracht. Zum Abdichten des Kühlmittelübergabebereiches sind im Bereich der Gleitnuten Weichdichtungen aus Kunststoff vorgesehen. Allerdings ermöglichen diese Weichdichtungen eine sichere Abdichtung nur bei niedrigen und mittleren Kühlmitteldrücken. Sehr hohe Kühlmitteldrücke können auf diese Weise nicht übergeben werden. Des Weiteren beeinflussen die Weichdichtungen die Stellgenauigkeit der Vorrichtung negativ. Sie stellen ein empfindliches und wartungsintensives Verschleißteil dar, das einem Alterungsprozess unterliegt.

Es ist eine Aufgabe der vorliegenden Erfindung, eine Vorrichtung zur Halterung von Werkzeugen bereitzustellen, welche über Kühlmittelleitungen im Grundhalter und in den Wechselhaltern verfügt, so dass eine Kühlmittelübergabe ohne externe Kühlmittelleitungen möglich ist und die auch mit sehr hohen Kühlmitteldrücken ohne die Nachteile einer Weichdichtung betrieben werden kann.

### Offenbarung der Erfindung

Diese Aufgabe wird durch die erfindungsgemäße Vorrichtung zur Halterung von Werkzeugen für Bearbeitungsmaschinen gelöst. Sie weist einen Grundhalter und mindestens einen, insbesondere mehrere, Wechselhalter auf. Jeder Wechselhalter weist zwei Wechselhalter-Führungselemente auf, die mit Grundhalter-Führungselementen des Grundhalters in Eingriff stehen. Weiterhin weist jeder Wechselhalter einen Wechselhalter-Kühlmittelkanal auf, welcher eine Wechselhalter-Kühlmittelkanalöffnung in einem der Wechselhalter-Führungselemente aufweist. Dieser kontaktiert eine Grundhalter-Kühlmittelkanalöffnung eines Grundhalter-Kühlmittelkanals, die an einem Grundhalter-Führungselement angeordnet ist.

Um die fluidische Verbindung zwischen den beiden Kühlmittelkanalöffnungen abzudichten, ist vorgesehen, dass erste Führungselemente, bei denen es sich entweder um die Wechselhalter-Führungselemente oder um die Grundhalter-Führungselemente handelt, einen konvexen halbkreisförmigen Querschnitt aufweisen, welcher bereichsweise von der Halbkreisform abweicht. In einer ersten Ausführungsform der Erfindung weist der konvexe halbkreisförmige Querschnitt einen abgeflachten Bereich auf, der den Scheitelpunkt des Halbkreises beinhaltet. Unter "abgeflacht" wird verstanden, dass der Radius des Querschnitts in diesem Bereich gegenüber der Halbkreisform verringert ist. In einer zweiten Ausführungsform der Erfindung weist der konvexe halbkreisförmige Querschnitt zwei aufgeweitete Bereiche auf, welche spiegelsymmetrisch an dem Halbkreis angeordnet sind. Unter "aufgeweitet" wird verstanden, dass der Radius des Querschnitts in diesen Bereichen gegenüber der Halbkreisform vergrößert ist. Diese Geometrien der ersten Führungselemente sorgen dafür, dass der Querschnitt der ersten Führungselemente in jeder der beiden Ausführungsformen jeweils an zwei Punkten an den zweiten Führungselementen anliegt. Durch festes Anpressen der ersten Führungselemente an die zweiten Führungselemente kann unter Verzicht auf eine Weichdichtung eine dichte Verbindung zwischen den beiden Kühlmittelkanälen geschaffen werden, welche selbst bei hohen Kühlmitteldrücken bis beispielsweise 200 bar ein Austreten von Kühlmittel verhindert. Indem auf die Weichdichtung und deren Fixierung verzichtet werden kann, ist es möglich, die Baubreite der erfindungsgemäßen Vorrichtung gegenüber Vorrichtungen mit Weichdichtung zu verringern.

Zweite Führungselemente, bei denen es sich um jene Führungselemente handelt, die mit den ersten Führungselementen in Eingriff stehen, weisen einen konkaven kreissektorförmigen Querschnitt mit einem Mittelpunktswinkel von weniger als 180° auf. Indem die zweiten Führungselemente keinen halbkreisförmigen Querschnitt, sondern nur einen kreissektorförmigen Querschnitt mit gegenüber dem Halbkreis verringerten Mittelpunktswinkel aufweisen, können die Führungselemente trotz der besonderen Geometrie, welche zur Abdichtung der Kühlmittelverbindung vorgesehen ist, einfach wieder voneinander getrennt werden.

In der ersten Ausführungsform ist es bevorzugt, dass der abgeflachte Bereich einen Mittelpunktswinkel im Bereich von 10° bis 12° aufweist. Weiterhin ist es bevorzugt, dass die Breite des abgeflachten Bereiches im Bereich von 0,7 bis 0,8 mm liegt. Diese Geometrie bewirkt eine besonders sichere Abdichtung der Kühlmittelverbindungen.

In der zweiten Ausführungsform der Erfindung ist es bevorzugt, dass der Mittelpunkt jedes aufgeweiteten Bereiches mit dem Scheitelpunkt des Halbkreises einen Winkel im Bereich von 40° bis 65° bildet. Weiterhin ist es bevorzugt, dass die Breite jedes aufgeweiteten Bereiches im Bereich von 0,2 bis 0,3 mm liegt. Auch diese Geometrie bewirkt eine besondere sichere Abdichtung der Kühlmittelübergabe.

Unter der Breite des abgeflachten Bereiches oder der Breite des aufgeweiteten Bereiches wird jeweils die Länge der linearen Verbindung zwischen den beiden Punkten verstanden, in denen der halbkreisförmige Querschnitt beginnt von der Halbkreisgeometrie abzuweichen.

Der konvexe halbkreisförmige Querschnitt ist in der ersten Ausführungsform der Erfindung in dem abgeflachten Bereich im Scheitelpunkt des Halbkreises vorzugsweise um eine Abflachung von 4 µm bis 8 µm gegenüber der Halbkreisform abgeflacht. In der zweiten Ausführungsform der Erfindung ist der konvexe halbkreisförmige Querschnitt im Mittelpunkt jedes aufgeweiteten Bereiches um eine Aufweitung von 4 µm bis 8 µm gegenüber der Halbkreisform aufgeweitet. Diese Abflachung bzw. Aufweitung führt am Querschnitt der ersten Führungselemente zu Auflagepunkten, welche besonders gut für die Abdichtung der fluidischen Verbindung zwischen den Kühlmittelkanälen geeignet sind.

Der Mittelpunktswinkel des konkaven kreissektorförmigen Querschnitts liegt bevorzugt im Bereich von 140° bis 144°. Dieser Bereich ist klein genug, um ein einfaches Trennen der Führungselemente zu ermöglichen und gleichzeitig groß genug, um eine sichere Verbindung zwischen den Wechselhaltern und dem Grundhalter zu gewährleisten.

Wenn der kreissektorförmige Querschnitt an seinen Enden in einen horizontalen Verlauf des Halters übergeht, welcher die zweiten Führungselemente aufweist, so führt dies dazu, dass zwischen dem Grundhalter und den Wechselhaltern ein Spalt entsteht. Um die Ausbildung dieses Spaltes zu vermeiden, ist es bevorzugt, dass sich an beiden Enden des konkaven kreissektorförmigen Querschnitts jeweils ein linearer Abschnitt des Querschnitts anschließt. Besonders bevorzugt liegt der Winkel zwischen einer Verbindung des Scheitelpunkts des konkaven kreissektorförmigen Querschnitts mit dem Kreismittelpunkt des Kreissektors und den linearen Abschnitten jeweils im Bereich von 16° bis 20°. Ein derart ausgebildeter linearer Abschnitt, der auch als Fase bezeichnet werden kann, behindert die Trennung des Wechselhalters vom Grundhalter nicht. Er führt jedoch dazu, dass der Spalt zwischen dem Grundhalter und dem Wechselhalter geschlossen wird. Dies hat den Vorteil, dass ein Halter, welcher keine ersten Führungselemente aufweist, in derselben Höhe auf einen Halter mit zwei Führungselementen aufgelegt werden kann, wie ein Halter, der mit seinen ersten Führungselementen in die zweiten Führungselemente des anderen Halters eingreift.

Vorzugsweise hat mindestens eine Wechselhalter-Kühlmittelkanalöffnung die Form eines Langloches, dessen Längsachse entlang der Längsachse seines Wechselhalter-Führungselements verläuft. Weiterhin ist es bevorzugt, dass mindestens eine Grundhalter-Kühlmittelkanalöffnung die Form eines Langloches hat, dessen Längsachse entlang der Längsachse seines Grundhalter-Führungselements verläuft. Durch diese Geometrie der Kühlmittelkanalöffnungen kann eine Überdeckung der Kühlmittelkanalöffnungen über einen großen Verstellbereich zwischen Grundhalter und Wechselhalter gewährleistet werden. Auf diese Weise wird also sichergestellt, dass der Verstellbereich zwischen Grundhalter und Wechselhalter nicht dadurch limitiert wird, dass auf einen begrenzten Überdeckungsbereich der Kühlmittelkanalöffnungen Rücksicht genommen werden müsste.

Vorzugsweise sind die ersten Führungselemente Wechselhalter-Führungselemente und die zweiten Führungselemente sind Grundhalter-Führungselemente. Indem den Wechselhaltern durch eine konvexe Geometrie ihrer Führungselemente ein größeres Volumen verliehen wird, können besondere Ausführungen der erfindungsgemäßen Vorrichtung realisiert werden, welche im Folgenden beschrieben werden.

So kann vorzugsweise in den Wechselhaltern jeweils ein Datenträger so angeordnet werden, dass er zumindest teilweise in einem Wechselhalter-Führungselement, welches keine Wechselhalter-Kühlmittelkanalöffnung aufweist, angeordnet ist. Hierbei wird ausgenutzt, dass im Bereich eines konvexen Wechselhalter-Führungselements, welches nicht mit einem Wechselhalter-Kühlmittelkanal verbunden ist, ein großes freies Volumen zur Verfügung steht, das die Unterbringung des Datenträgers ermöglicht. Dieser Datenträger kann beispielsweise als RFID-Chip ausgeführt sein, welcher eine kontaktlose Identifikation des Wechselhalters ermöglicht.

In einer Ausführungsform der erfindungsgemäßen Vorrichtung, welche insbesondere für Langdrehmaschinen geeignet ist, weisen die Wechselhalter jeweils zwischen ihren beiden Wechselhalter-Führungselementen eine Wechselhalter-Verbindungsöffnung mit Hinterschnitt auf. Diese greift mit einem Grundhalter-Vorsprung des Grundhalters ein, der zwischen zwei Grundhalter-Führungselementen angeordnet ist. Der Grundhalter-Vorsprung weist insbesondere einen rautenförmigen Querschnitt mit Hinterschnitt auf. Die Grundhalter weisen jeweils eine Exzenterschraube pro Wechselhalter auf. Der Schraubenkopf der Exzenterschraube ist in einer Schraubenöffnung eines Wechselhalters angeordnet. Der Schraubenschaft ist in einer linearen Gewindeöffnung des Grundhalters angeordnet. Die Längsachse der Gewindeöffnung verläuft in Richtung des Grundhalter-Vorsprungs abgewinkelt. Ein vom Grundhalter getrennter Wechselhalter kann zunächst locker an diesem angeordnet werden, indem der Grundhalter-Vorsprung in die Wechselhalter-Verbindungsöffnung eingebracht wird und der Schraubenkopf in die Schraubenöffnung eingebracht wird. Durch Anziehen der Exzenterschraube übt deren Schraubenkopf eine Kraft auf die Schraubenöffnung aus, welche sich so auf den Wechselhalter überträgt, dass der Grundhalter-Vorsprung fest in den Hinterschnitt der Wechselhalter-Verbindungsöffnung hineingepresst wird. Auf diese Weise kann der Wechselhalter so fest auf den Grundhalter gepresst werden, dass eine fluiddichte Verbindung zwischen den konvexen ersten Führungselementen des Wechselhalters und den zweiten konkaven Führungselementen des Grundhalters geschaffen wird.

In dieser Ausführungsform ist es bevorzugt, dass ein Fixierelement in einer linearen Fixierelementöffnung angeordnet ist. Diese verläuft so durch den Grundhalter und einen Wechselhalter, dass sie auf der von der Gewindeöffnung abgewandten Seite der Wechselhalter-Verbindungsöffnung im Wechselhalter endet. Ihre Längsachse ist in Richtung des Grundhalter-Vorsprungs abgewinkelt. Insbesondere ist das dem Wechselhalter zugewandte Ende des Fixierelements als elastisches bzw. federndes Element ausgebildet, das in den Teil der Fixierelementöffnung eingreift, welche im Wechselhalter verläuft. Wenn ein Wechselhalter auf dem Grundhalter angeordnet wird, so kann mittels des Fixierelements bereits eine Vorfixierung des Wechselhalters erfolgen, indem das Fixierelement so in den im Wechselhalter angeordneten Abschnitt der Fixierelementöffnung hineindrückt, dass der Grundhalter-Vorsprung mit dem Hinterschnitt der Wechselhalter-Verbindungsöffnung eingreift. Dadurch muss der Wechselhalter von einem Bediener beim Anziehen der Exzenterschraube nicht mehr festgehalten werden.

In einer anderen Ausführungsform der Vorrichtung, die insbesondere für Mehrspindelmaschinen geeignet ist, weisen die Wechselhalter jeweils ein Befestigungselement mit ersten Eingreifelementen auf, das jeweils in einem Aufnahmebereich des Grundhalters angeordnet ist. Jeweils ein Befestigungskanal verläuft so durch den Grundkörper, dass er in dem Aufnahmebereich endet, wobei ein Befestigungsstift in dem Befestigungskanal angeordnet ist, der zwei Eingreifelemente aufweist, die mit den ersten Eingreifelementen eingreifen. Dies ermöglicht eine positionsgenaue Befestigung des Wechselhalters auf dem Grundhalter, wobei dieser so fest an dem Grundhalter angepresst wird, dass die fluidische Verbindung zwischen den Kühlmittelkanälen des Grundhalters und des Wechselhalters zuverlässig abgedichtet wird.

Die ersten Eingreifelemente sind insbesondere als Verzahnung an einer Seitenfläche des Befestigungselements ausgebildet. Die zweiten Eingreifelemente sind insbesondere als Verzahnung am Ende des Befestigungsstiftes ausgebildet. Indem die beiden Verzahnungen ineinandergreifen, kann mittels des Befestigungsstiftes eine so große Kraft auf das Befestigungselement übertragen werden, dass der Wechselhalter fest an den Grundhalter angepresst wird.

An dem dem Aufnahmebereich abgewandten Ende des Befestigungsstiftes ist vorzugsweise ein Gewindekopf mit Außengewinde in dem Befestigungskanal angeordnet. Ein solcher Gewindekopf, der als von dem Befestigungsstift separates Bauteil ausgeführt ist, ermöglicht es den Befestigungsstift an das Befestigungselement anzupressen, ohne dass es dabei zu einer Verdrehung des Befestigungsstiftes kommt. Nur der Gewindekopf muss hierzu gedreht werden. Mangels einer festen Verbindung zwischen dem Gewindekopf und dem Befestigungsstift kann durch Herausdrehen des Gewindekopfes aus dem Befestigungskanal der Befestigungsstift allerdings nicht wieder aus dem Befestigungskanal entfernt werden. Deshalb ist es weiterhin bevorzugt, dass ein Federkanal so in dem Grundkörper angeordnet ist, dass er in dem Befestigungskanal endet. In dem Federkanal ist ein Federelement so angeordnet, dass es in eine Federöffnung des Befestigungsstiftes eingreift. Unter einem Federelement wird hierbei ein entlang seiner Längsachse elastisches Element, wie beispielsweise eine Spiralfeder verstanden.

Weiterhin ist es bevorzugt, dass sich eine Sicherungsöffnung so durch den Grundkörper erstreckt, dass sie im Befestigungskanal endet. In der Sicherungsöffnung kann eine Verdrehsicherung so angeordnet werden, dass sie ein Verdrehen des Befestigungsstiftes im Befestigungskanal verhindert.

### Kurze Beschreibung der Zeichnungen

Ausführungsbeispiele der Erfindung sind in den Zeichnungen dargestellt und werden in der nachfolgenden Beschreibung näher erläutert.
- Fig. 1: zeigt eine schematische isometrische Darstellung eines Wechselhalters gemäß einem Ausführungsbeispiel der Erfindung.
- Fig. 1b: zeigt eine transparente Darstellung des Wechselhalters gemäß Fig. 1a.
- Fig. 1c: zeigt eine Schnittdarstellung des Wechselhalters gemäß Fig. 1a entlang der Linie Ic-Ic in Fig. 1b.
- Fig. 1d: zeigt eine Schnittdarstellung des Wechselhalters gemäß Fig. 1a entlang der Linie Id-Id in Fig. 1b.
- Fig. 1e: zeigt eine Frontansicht des Wechselhalters gemäß Fig. 1a.
- Fig. 1f: zeigt eine Detailansicht aus Fig. 1e.
- Fig. 2a: zeigt eine Frontansicht auf einen Wechselhalter gemäß einem anderen Ausführungsbeispiel der Erfindung.
- Fig. 2b: zeigt eine Detailansicht aus Fig. 2a.
- Fig. 3a: zeigt eine transparente isometrische Darstellung eines Grundhalters gemäß einem Ausführungsbeispiel der Erfindung.
- Fig. 3b: zeigt eine Schnittdarstellung des Grundhalters gemäß Fig. 3a entlang der Linie IIIb-IIIb.
- Fig. 3c: zeigt eine Frontansicht des Grundhalters gemäß Fig. 3a.
- Fig. 3d: zeigt eine Detailansicht der Fig. 3c.
- Fig. 4: zeigt eine Detailansicht eines Grundhalters gemäß einem anderen Ausführungsbeispiel der Erfindung.
- Fig. 5: zeigt einen Werkzeughalter gemäß Fig. 1a, welcher auf einem Grundhalter gemäß Fig. 3a angeordnet ist, in isometrischer Darstellung.
- Fig. 6: zeigt eine isometrische Darstellung eines Grundhalters mit mehreren Wechselhaltern gemäß einem anderen Ausführungsbeispiel der Erfindung.
- Fig. 7: zeigt einen Ausschnitt aus dem Grundhalter gemäß Fig. 6 in isometrischer Darstellung.
- Fig. 8a: zeigt eine Schnittdarstellung eines Wechselhalters, der von dem Grundhalter gemäß Fig. 6 angeordnet wird in einer ersten Anordnungsposition.
- Fig. 8b: zeigt den Grundhalter und den Wechselhalter gemäß Fig. 8a in einer zweiten Anordnungsposition.
- Fig. 8c: zeigt den Grundhalter und den Wechselhalter gemäß Fig. 8a in einer dritten Anordnungsposition.
- Fig. 9a: zeigt eine isometrische Darstellung eines Grundhalters und eines Wechselhalters gemäß noch einem anderen Ausführungsbeispiel der Erfindung.
- Fig. 9b: zeigt in isometrischer Darstellung wie der Grundhalter gemäß Fig. 9a auf dem Wechselhalter angeordnet ist.
- Fig. 9c: zeigt eine Schnittdarstellung des Grundhalter und des Wechselhalters entlang der Linie IXc-IXc in Fig. 9b.
- Fig. 10a: zeigt eine Schnittdarstellung des Grundhalters gemäß Fig. 9a in einer ersten Anordnungsposition.
- Fig. 10b: zeigt eine Schnittdarstellung des Grundhalters und des Wechselhalters gemäß Fig. 9a in einer zweiten Anordnungsposition.
- Fig. 10c: zeigt den Grundhalter und den Wechselhalter gemäß Fig. 9a in einer dritten Anordnungsposition.

### Ausführungsbeispiele der Erfindung

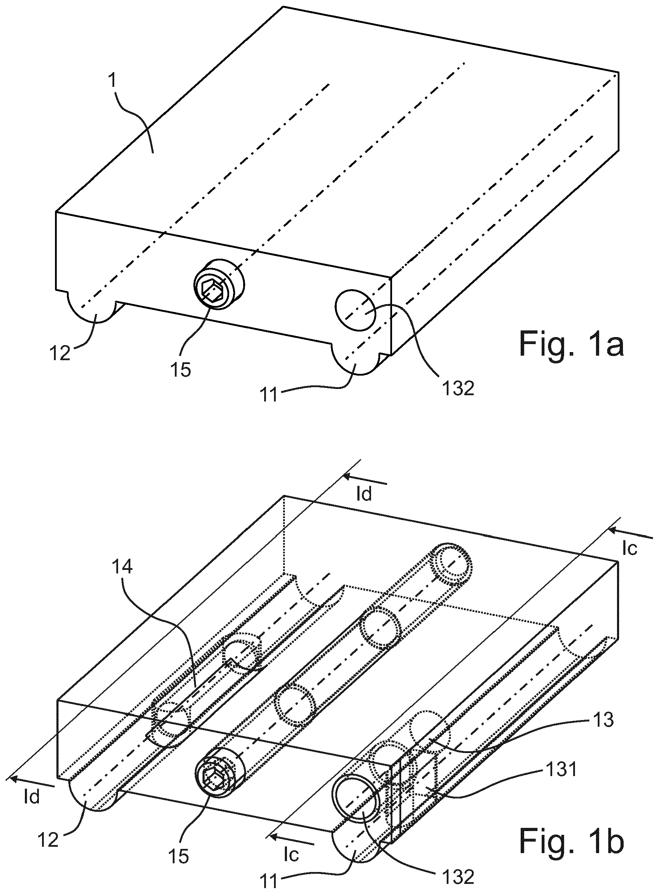

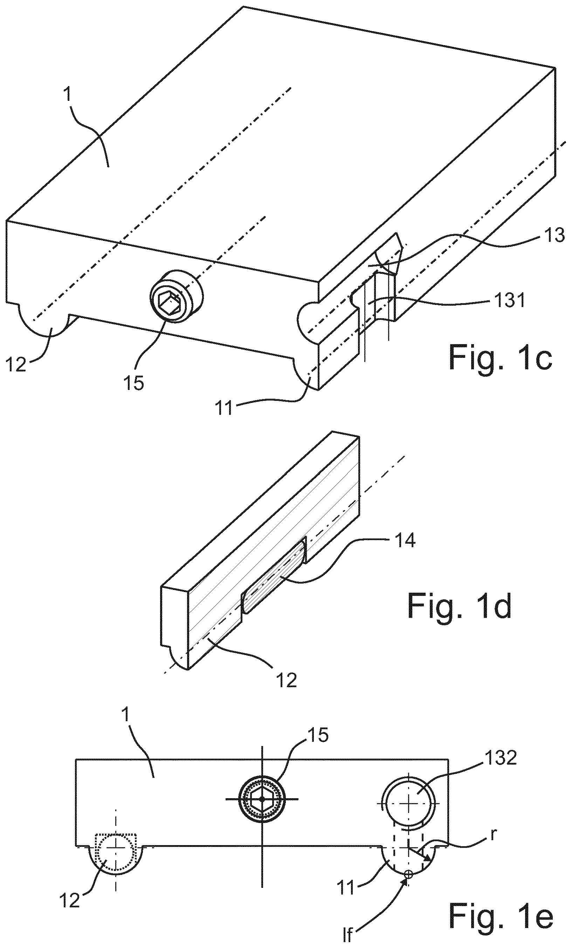

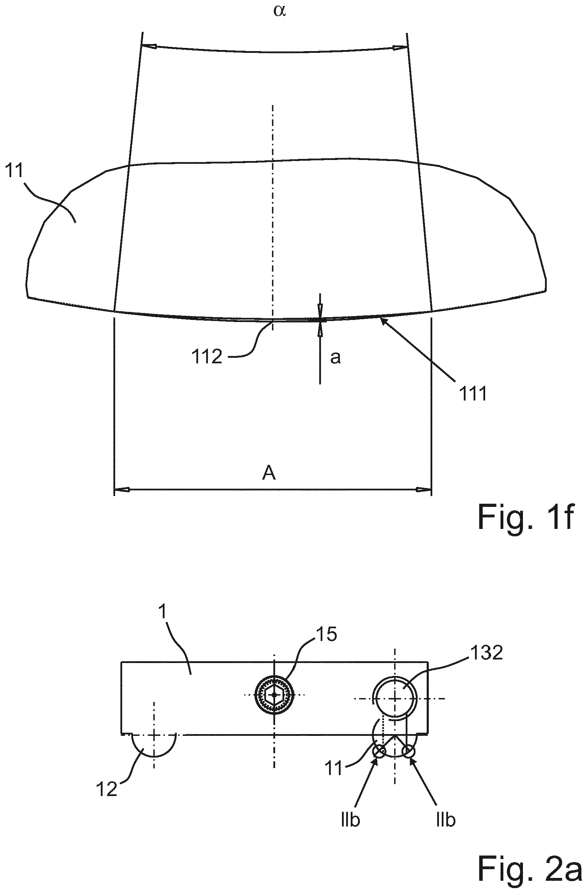

In den Fig. 1a bis 1f ist ein erstes Ausführungsbeispiel eines erfindungsgemäßen Wechselhalters 1 dargestellt. Dieser weist zwei parallel verlaufende konvexe Wechselhalter-Führungselemente 11, 12 auf. Oberhalb des ersten Wechselhalter-Führungselements 11 verläuft parallel zu diesem in seinem Inneren ein Wechselhalter-Kühlmittelkanal 13. Dieser verfügt über einen kreisförmigen Querschnitt. Eine Wechselhalter-Kühlmittelkanalöffnung 131, die langlochförmig ausgebildet ist, verläuft orthogonal zu dem Wechselhalter-Kühlmittelkanal 13 durch das erste Wechselhalter-Führungselement 11 und endet in dessen Scheitelpunkt. An der Frontseite des Wechselhalters 1 verlässt der Wechselhalter-Kühlmittelkanal 13 diesen durch eine Auslassöffnung 132. Ein RFID-Datenträger 14, dessen Längsachse parallel zur Längsachse des zweiten Wechselhalter-Führungselements 12 verläuft, ist in jenem angeordnet. Zwischen den beiden Wechselhalter-Führungselementen 11, 12 verläuft parallel zu diesen eine Positionierschraube 15 durch den Wechselhalter 1. Diese ist dazu vorgesehen, um den Wechselhalter 1 genau auf einem Grundhalter zu positionieren. Die beiden Wechselhalter-Führungselemente 11, 12 weisen jeweils einen halbkreisförmigen Querschnitt mit einem abgeflachten Bereich auf. Dies ist in Fig. 1f exemplarisch für das erste Wechselhalter-Führungselement 11 dargestellt. Der Radius des Halbkreises beträgt im vorliegenden Beispiel 4,000±0,002 mm. In einem abgeflachten Bereich 111, der eine Breite A von 0,76 mm aufweist, ist der Radius gegenüber der idealen Halbkreisform verringert. Die hierdurch erzeugte Abflachung a beträgt im Scheitelpunkt 112 des Querschnitts 6 µm, so dass der Radius r des Halbkreises an dieser Stelle nur noch 3,944 mm beträgt. Die Abflachung ist größer als die Fertigungstoleranz von 2 µm. Die Grenzen des abgeflachten Bereiches 111 werden durch jene beiden Punkte gebildet, in denen die ideale Halbkreisform des Querschnitts in eine abgeflachte Kontur übergeht. Diese beiden Punkte bilden mit dem Mittelpunkt des Halbkreises einen Winkel α von 11°.

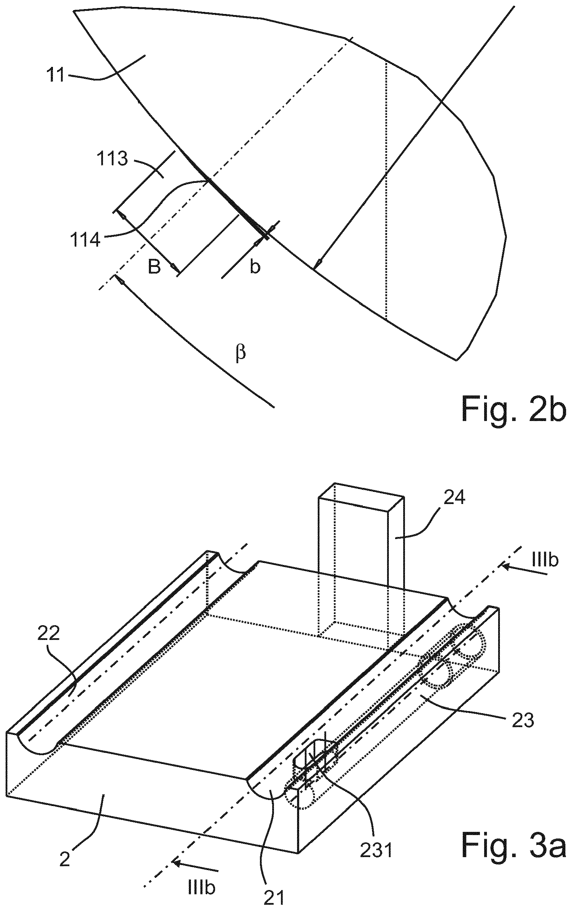

In einem zweiten Ausführungsbeispiel des Wechselhalters 1, das in den Fig. 2a und 2b dargestellt ist, ist keine Abflachung 111 vorhanden. Stattdessen weisen die Wechselhalter-Führungselemente 11, 12 jeweils zwei Aufweitungen an einem ansonsten halbkreisförmigen Querschnitt auf. Diese sind spiegelsymmetrisch am Querschnitt der Wechselhalter-Führungselemente 11, 12 angeordnet. Ein aufgeweiteter Bereich 113 hat eine Breite B von 0,27 mm. Die Aufweitung b beträgt im Mittelpunkt des aufgeweiteten Bereiches 113, in welchem der Unterschied zwischen dem Radius eines perfekten Halbkreises und dem Radius in dem aufgeweiteten Bereich 113 am größten ist, 6 µm. Der Radius r des Querschnitts ist an dieser Stelle also von 4,000 auf 4,006 mm aufgeweitet. Der Mittelpunkt 114 des aufgeweiteten Bereiches 113 und der Scheitelpunkt der halbkreisförmigen Kontur bilden mit dem Mittelpunkt des Halbkreises einen Winkel β von 55°.

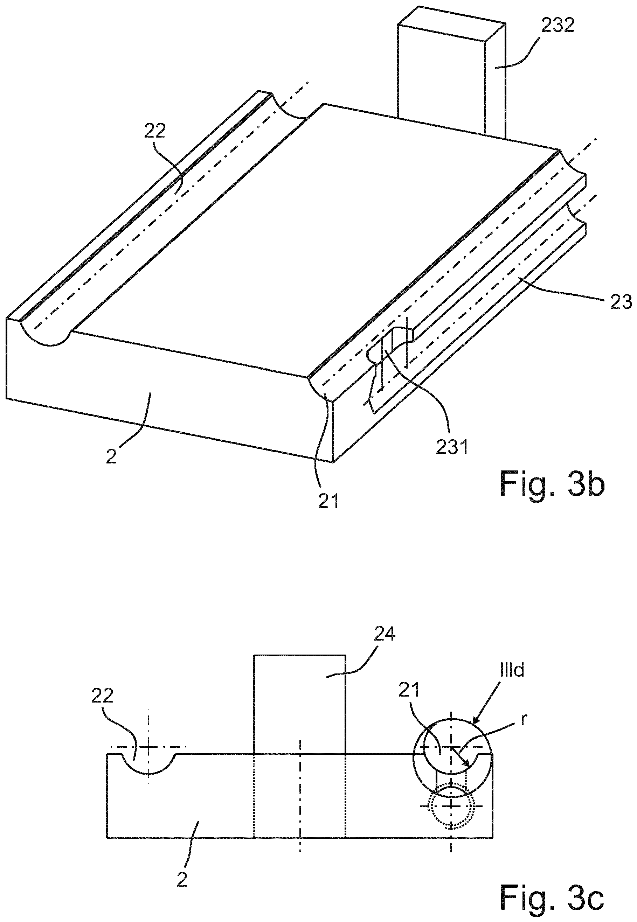

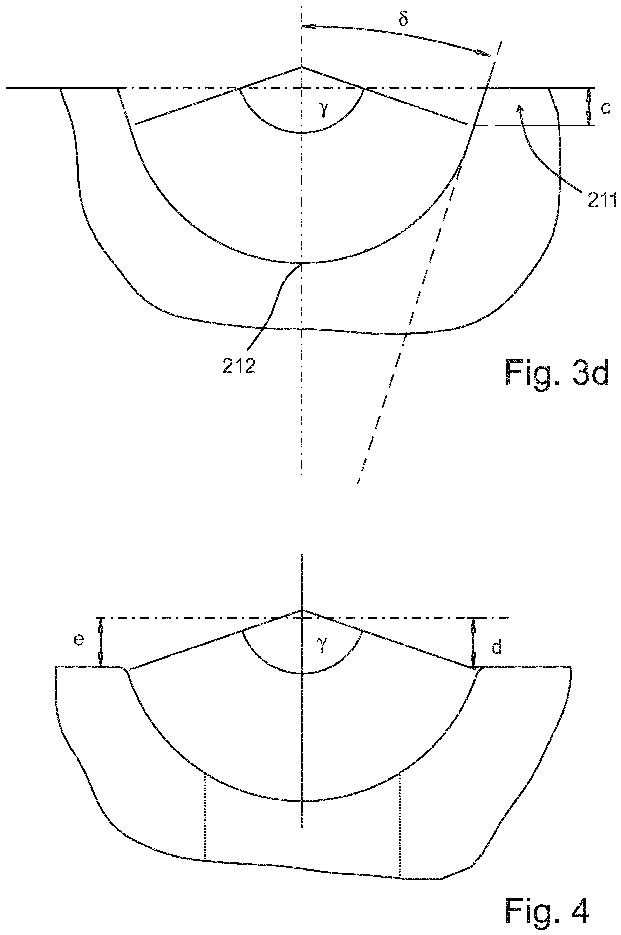

Ein erstes Ausführungsbeispiel eines erfindungsgemäßen Grundhalters ist in den Fig. 3a bis 3d dargestellt. Der Grundhalter 2 weist zwei parallel verlaufende konkave Grundhalter-Führungselemente 21, 22 auf. Unterhalb des ersten Grundhalter-Führungselements 21 ist ein Grundhalter-Kühlmittelkanal 23 angeordnet, welcher parallel zu diesem verläuft. Eine Grundhalter-Kühlmittelkanalöffnung, welche derart langlochförmig ausgebildet ist, dass die Längsachse des Langlochs parallel zur Längsachse des ersten Grundhalter-Führungselements 21 verläuft, verbindet die konkave Oberfläche des ersten Grundhalter-Führungselements 21 mit dem Grundhalter-Kühlmittelkanal 23. Ein Positionieranschlag 24 ist an einem Ende des Grundhalters 2 zwischen den beiden Grundhalter-Führungselementen 21, 22 angeordnet. Die konkave Kontur der Grundhalter-Führungselemente 21, 22 weist einen kreissektorförmigen Bereich mit einem Mittelpunktswinkel γ von 142° auf. Der Radius r dieses kreissektorförmigen Bereiches beträgt im vorliegenden Beispiel 4,000 mm. An seinen beiden Seiten geht der kreissektorförmige Querschnitt in einen linearen Abschnitt 211 des Querschnitts über, der eine Höhe c von 0,93 mm aufweist. Die Verlängerung des linearen Abschnitts bildet mit der Verbindungsgeraden zwischen dem Mittelpunkt des Kreissektors und dem Scheitelpunkt 212 des Kreissektors einen Winkel δ von 18°. Der lineare Abschnitt 211 bildet eine Fase.

In einem zweiten Ausführungsbeispiel des Grundhalters 2 unterscheidet sich der Querschnitt der Grundhalter-Führungselemente 11, 12, wie in Fig. 4 dargestellt ist, von dem Querschnitt gemäß dem ersten Ausführungsbeispiel dadurch, dass auf den linearen Abschnitt 211 verzichtet wird. Stattdessen geht der Querschnitt in einem Abstand d von 0,94 mm in eine Abrundung über, welche in einem Abstand e von 0,8 mm zu der Oberfläche des Grundhalters 2 gemäß dem ersten Ausführungsbeispiel bereits in die Horizontale übergeht.

Damit ist der Grundhalter 2 gemäß dem zweiten Ausführungsbeispiel niedriger als der Grundhalter 2 gemäß dem ersten Ausführungsbeispiel.

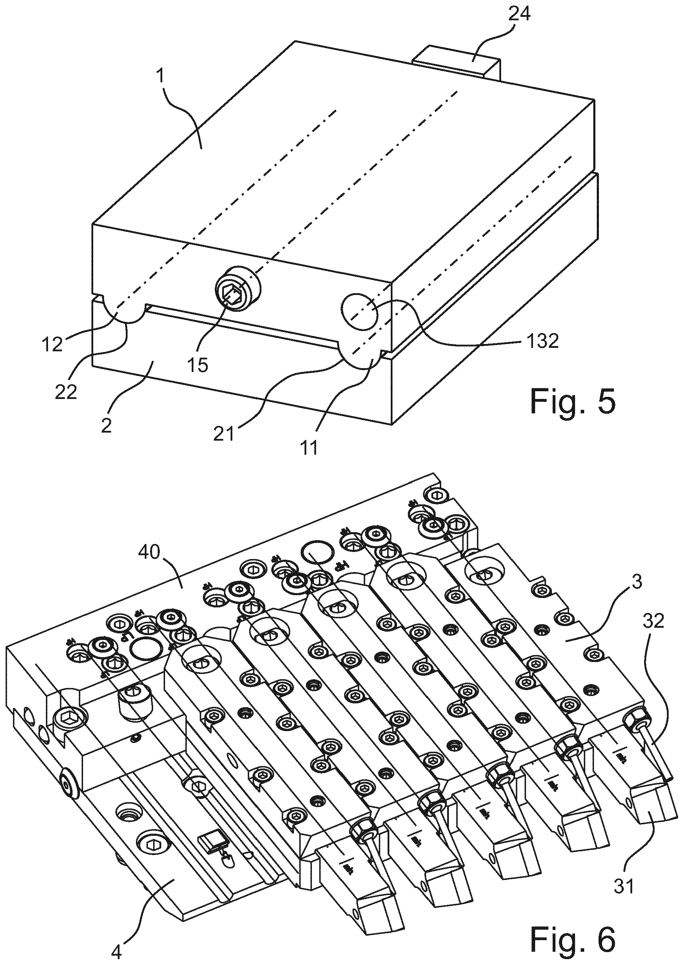

In Fig. 5 ist dargestellt, wie ein Wechselhalter 1 gemäß seinem ersten oder zweiten Ausführungsbeispiel auf einem Grundhalter 2 gemäß dessen zweitem Ausführungsbeispiel positioniert ist. Die Wechselhalter-Kühlmittelkanalöffnung 131 ist so auf der Grundhalter-Kühlmittelkanalöffnung 231 positioniert, dass diese sich zumindest zum Teil überdecken. Aufgrund des abgeflachten Bereiches 111 oder der aufgeweiteten Bereiche 113 liegt der Querschnitt der Wechselhalter-Führungselemente 11, 12 jeweils an zwei Punkten auf dem Querschnitt der Grundhalter-Führungselemente 21, 22 auf, so dass die Verbindung zwischen den Kühlmittelkanalöffnungen 131, 231 dicht abgeschlossen werden kann. Im Grundhalter 2 bereitgestelltes Kühlmittel kann so durch den Grundhalter-Kühlmittelkanal 23 in die Nähe des Wechselhalters gelangen. Über die Grundhalter-Kühlmittelkanalöffnung 231 und die Wechselhalter-Kühlmittelkanalöffnung 131 wird es in den Wechselhalter-Kühlmittelkanal 13 übergeben. Diesem kann es durch die Auslassöffnung 132 entnommen werden. Durch Anziehen der Positionierschraube 15, welche sich über die gesamte Länge des Wechselhalters 1 erstreckt, kann dieser am Positionieranschlag 24 des Grundhalters 2 feinjustiert werden. Da der Querschnitt der Wechselhalter-Führungselemente 11, 12, welcher abgesehen von dem abgeflachten Bereich 111 und den aufgeweiteten Bereichen 113 halbkreisförmig ist, in einem Querschnitt der Grundhalter-Führungselemente 21, 22 zu liegen kommt, welche nur einen kreissektorförmigen Querschnitt mit einem Mittelpunktswinkel von weniger als 180° aufweisen, befindet sich zwischen dem Wechselhalter 1 und dem Grundhalter 2 ein Spalt. Wird statt des Grundhalters 2 gemäß seinem zweiten Ausführungsbeispiel der Grundhalter 2 gemäß seinem ersten Ausführungsbeispiel verwendet, so wird die Oberseite des Grundhalters 2 mittels der linearen Abschnitte 211 gegenüber der Oberseite des Grundhalters 2 gemäß seinem zweiten Ausführungsbeispiel um 0,8 mm nach oben versetzt, so dass sie an der Unterseite des Wechselhalters 1 anliegt und der Spalt geschlossen wird.

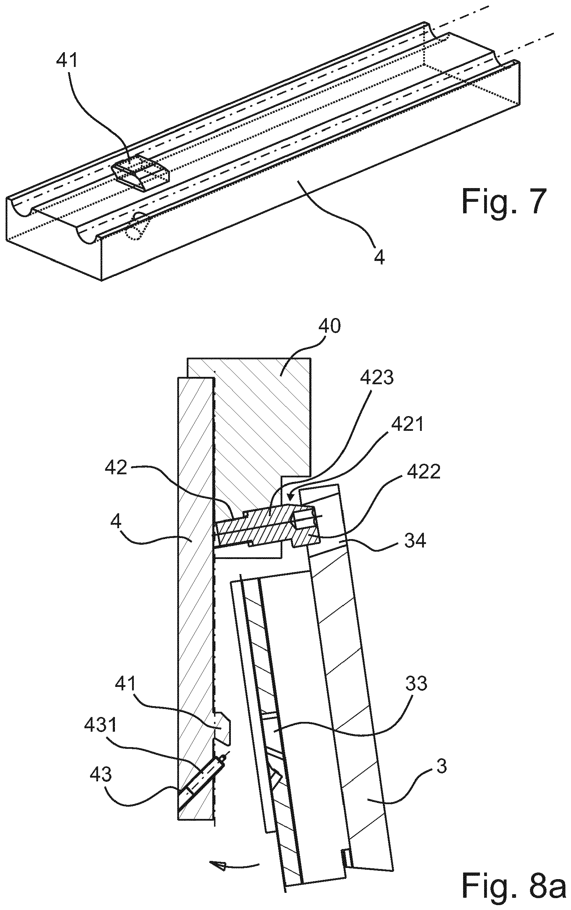

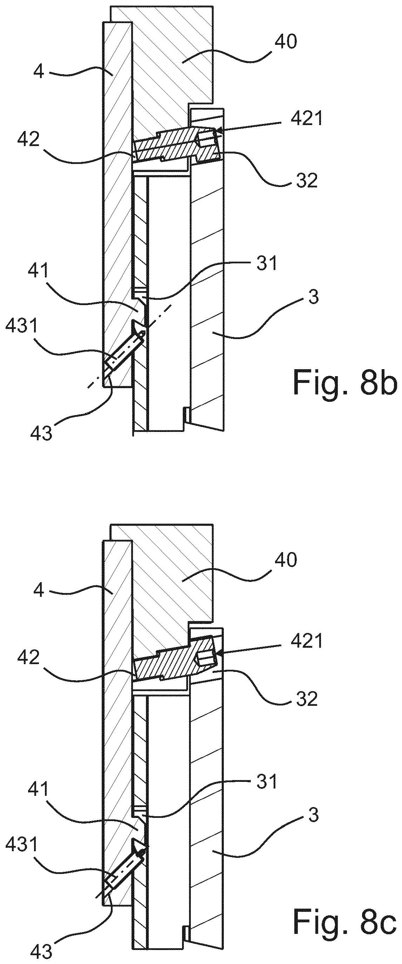

In Fig. 6 sind fünf der ursprünglichen sechs Wechselhalter 3 dargestellt, welche auf einem Grundhalter 4 für eine Langdrehmaschine positioniert sind. Jeder Wechselhalter 3 trägt als Werkzeug einen Drehmeißel 31. Außerdem ist jeweils eine Kühlmitteldüse 32 am Auslass des Wechselhalter-Kühlmittelkanals angeordnet. Wie in Fig. 7 dargestellt ist, ist zwischen zwei konkaven Grundhalter-Führungselementen des Grundhalters 4 ein Grundhalter-Vorsprung 41 angeordnet. Dieser weist einen rautenförmigen Querschnitt auf, so dass er über einen Hinterschnitt verfügt, welcher in die Richtung der Drehmeißel 31 gerichtet ist. In einer Kühlmittelleiste, die als Positionieranschlag 40 des Grundhalters 4 fungiert, ist eine Gewindeöffnung 42 so angeordnet, dass sie in Richtung des Grundhalter-Vorsprungs 41 abgewinkelt ist. In dieser Gewindeöffnung 42 ist eine Exzenterschraube 421 so angeordnet, dass ihr Schraubenkopf 422 aus der Gewindeöffnung 42 herausragt, während ihr Schraubenschaft 423 von der Gewindeöffnung 42 aufgenommen wird. Eine Fixierelementöffnung 43 ist auf der dem Positionieranschlag 40 abgewandten Seite des Grundhalter-Vorsprungs 41 im Grundhalter 4 so angeordnet, dass ihre Längsachse in Richtung des Grundhalter-Vorsprungs 41 abgewinkelt ist. In dieser Fixierelementöffnung 43 ist ein Fixierelement 431 angeordnet, welches teilweise aus der Fixierelementöffnung 43 herausragt. Das herausragende Ende des Fixierelements 431 endet in einem Stift, der in das Fixierelement 431 zurückfedern kann. Wie in Fig. 8a dargestellt ist, weist jeder Wechselhalter 3 an seiner Unterseite eine Wechselhalter-Verbindungsöffnung 33 auf. Weiterhin weist er an seinem dem Drehmeisel 31 abgewandten Ende eine Schraubenöffnung 34 auf. Wenn der Wechselhalter 3 auf dem Grundhalter 4 positioniert werden soll, so wird der Grundhalter-Vorsprung 41 in die Wechselhalter-Verbindungsöffnung 33 bewegt und der Schraubenkopf 422 wird in die Schraubenöffnung 34 bewegt. Dabei rastet der Stift des Fixierelements 431 in eine Verlängerung der Fixierelementöffnung 43 im Wechselhalter 3 ein, so dass der Hinterschnitt des Grundhalter-Vorsprungs 41 gegen einen Hinterschnitt der Wechselhalter-Verbindungsöffnung 33 gepresst wird. Auf diese Weise werden der Wechselhalter 3 und der Grundhalter 4 in der in Fig. 8b dargestellten Weise miteinander verbunden. Durch Drehen des Schraubenkopfes 422 um 180° wird die Exzenterschraube 421 angezogen. Wie in Fig. 8c dargestellt ist, führt dies dazu, dass die Hinterschnitte der Wechselhalter-Verbindungsöffnung 33 und des Grundhalter-Vorsprungs 41 nun noch weiter aufeinander zu bewegt werden, so dass der Wechselhalter 3 fest auf dem Grundhalter 4 angespannt wird. Der Wechselhalter 3 und der Grundhalter 4 verfügen über Führungselemente, Datenträger, Kühlmittelkanäle und Kühlmittelkanalöffnungen, wie sie jeweils für die ersten beiden Ausführungsbeispiele des Wechselhalters 1 und des Grundhalters 2 beschrieben wurden. Durch Anziehen der Exzenterschraube 421 wird der Wechselhalter 3 so fest mit dem Grundhalter 4 verbunden, dass eine fluiddichte Verbindung zwischen den Kühlmittelkanälen geschaffen werden kann.

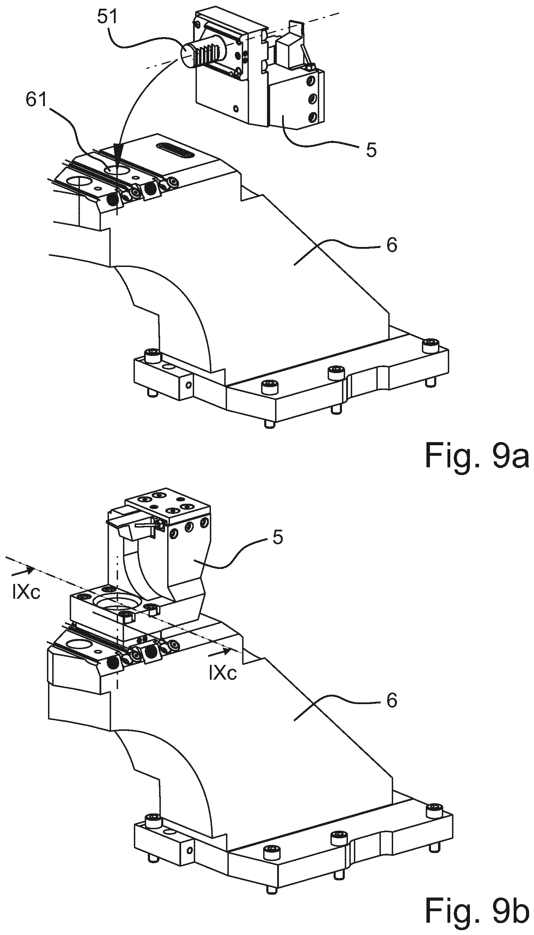

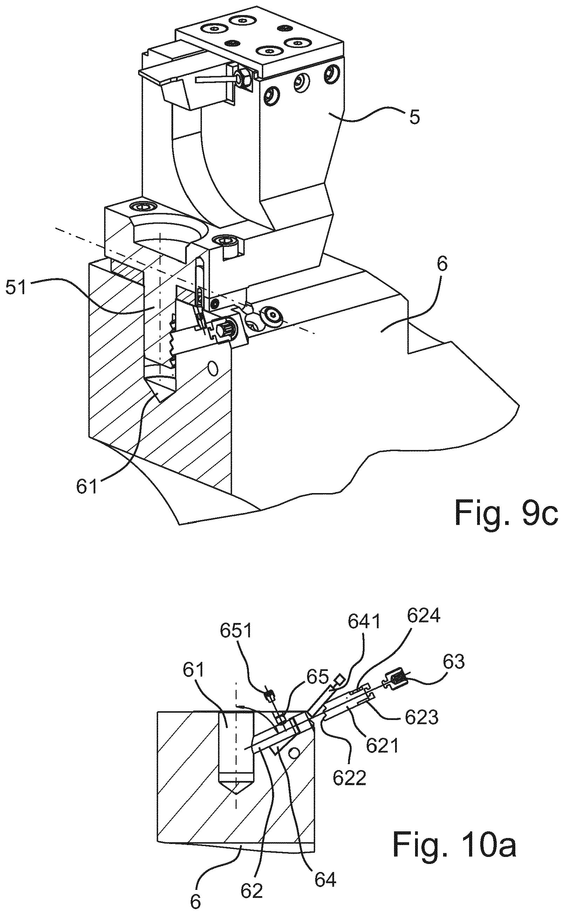

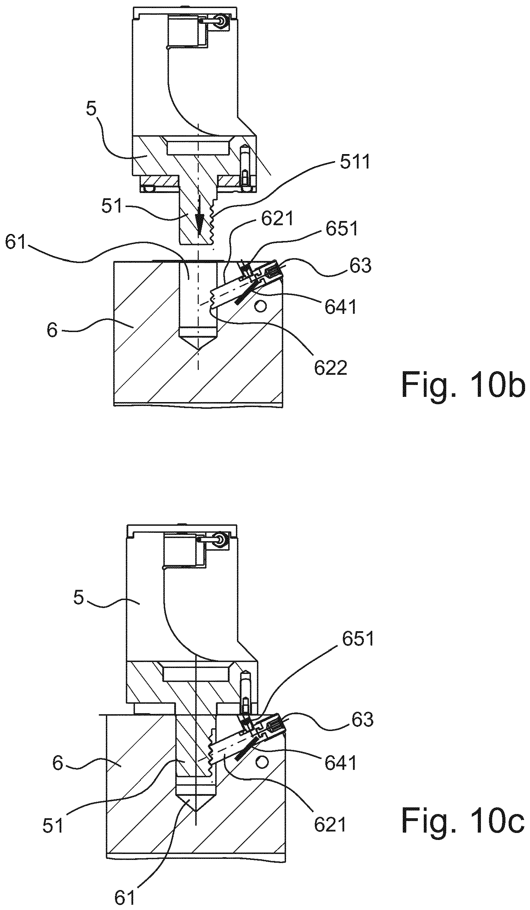

In den Fig. 9a bis 9c sind ein Wechselhalter 5 und ein Grundhalter 6 gemäß einem Ausführungsbeispiel der Erfindung dargestellt, welche für eine Mehrspindelmaschine geeignet sind. Auch dieser Wechselhalter 5 verfügt über Wechselhalter-Führungselemente, einen Wechselhalter-Kühlmittelkanal, eine Wechselhalter-Kühlmittelkanalöffnung und einen Datenträger, wie es für die ersten beiden Ausführungsbeispiele des Wechselhalters 1 beschrieben wurde. Der Grundhalter 6 verfügt über Grundhalter-Führungselemente, einen Grundhalter-Kühlmittelkanal und eine Grundhalter-Kühlmittelkanalöffnung, wie sie für die ersten beiden Ausführungsbeispiele des Grundhalters 2 beschrieben wurden. In den Fig. 10a bis 10c ist dargestellt, wie der Wechselhalter 5 an dem Grundhalter 6 fixiert werden kann. Der Wechselhalter 5 weist ein kreiszylinderförmiges Befestigungselement 51 auf, welches zwischen seinen beiden Wechselhalter-Führungselementen angeordnet ist und orthogonal auf der Unterseite des Wechselhalters 5 steht. Eine Seite des Befestigungselements 51 ist abgeflacht und weist Eingreifelemente 511 in Form einer Verzahnung auf, wobei die einzelnen Zähne orthogonal auf der Längsachse des Befestigungselements 51 stehen. In dem Grundhalter 6 ist zwischen dessen Grundhalter-Führungselementen ein Aufnahmebereich 61 angeordnet, welcher einen kreiszylinderförmigen Bereich aufweist, dessen Innendurchmesser dem Außendurchmesser des kreiszylinderförmigen Befestigungselements 51 entspricht. Abgewinkelt zur Längsachse des Aufnahmebereiches 61 verläuft durch den Grundhalter 6 ein Befestigungskanal 62. Wie in Fig. 10b dargestellt ist, wird vor Einbringen des Befestigungselements 51 in den Aufnahmebereich 61 ein Befestigungsstift 621 so in den Befestigungskanal 62 eingebracht, dass er sich noch nicht bis in den Aufnahmebereich 61 hinein erstreckt. Der Befestigungsstift 621 ist kreiszylinderförmig und weist kein Au-βengewinde auf. An seinem dem Aufnahmebereich 61 zugewandten Ende ist er so abgeschrägt, dass seine Endfläche vertikal verläuft. An dieser Endfläche sind zweite Eingreifelemente 622 in Form einer Verzahnung angeordnet. Die Zähne verlaufen horizontal. Nach Einbringen des Befestigungselements 51 in den Aufnahmebereich 61 wird ein Gewindekopf 63 mit Außengewinde in einem Bereich des Befestigungskanals 62, welcher ein Innengewinde aufweist, so angezogen, dass der Befestigungsstift 621 in den Aufnahmebereich 61 hineinbewegt wird. Dadurch greifen die zweiten Eingreifelemente 622 mit den parallel zu ihnen verlaufenden ersten Eingreifelementen 511 ein und ziehen das Befestigungselement 51 vertikal immer tiefer in den Aufnahmebereich 61 hinein, bis die Wechselhalter-Führungselemente so fest in die Grundhalter-Führungselemente eingepresst werden, dass eine fluiddichte Verbindung zwischen den Kühlmittelkanälen geschaffen wird. Dies ist in Fig. 10c dargestellt. Um nach einem Herausdrehen des Gewindekopfes 63 den Befestigungsstift 621 wieder aus dem Befestigungskanal 62 entfernen zu können, so dass der Wechselhalter 6 vom Grundhalter 5 getrennt werden kann, ist ein Federkanal 62 so in dem Grundhalter 6 angeordnet, dass er gegenüber der Längsachse des Befestigungskanals 62 abgewinkelt ist und in diesem endet. Noch vor Einbringen des Befestigungsstiftes 621 im Befestigungskanal 62 wird ein Federelement 641 in Form einer Spiralfeder mit einem Anlagekopf in den Federkanal 64 eingebracht. Es greift mit seinem Anlagekopf in eine Federöffnung 623 des Befestigungsstiftes 621 ein. Wenn nun der Gewindekopf 63 entfernt wird, so entspannt sich das Federelement 641 und drückt dabei den Befestigungsstift 621 teilweise aus dem Befestigungskanal 62 heraus, so dass er anschließend gegriffen und vollständig aus dem Befestigungskanal 62 entfernt werden kann. Weiterhin verläuft eine Sicherungsöffnung 65 orthogonal zur Längsachse des Befestigungskanals 62 durch die Oberseite des Grundhalters 6. Nachdem der Befestigungsstift 621 im Befestigungskanal 62 angeordnet wurde und dort mittels des Gewindekopfes 63 vor einem Herausfedern gesichert wurde, kann eine Verdrehsicherung 651 durch die Sicherungsöffnung in einen Sicherungsbereich 624 des Befestigungsstiftes 621 hineingedreht werden, um ein Verdrehen des Befestigungsstiftes 621 im Befestigungskanal 62 zu verhindern. Auf diese Weise wird sichergestellt, dass die zweiten Eingreifelemente 622 nicht aus der Horizontalen heraus verdreht werden. Die Verdrehsicherung 651 verhindert nicht, dass durch ein weiteres Drehen des Gewindekopfes 63 der Befestigungsstift 621 in den Aufnahmebereich 61 hineinbewegt wird.

## Patentansprüche

1. Vorrichtung zur Halterung von Werkzeugen (31 ) für Bearbeitungsmaschinen, aufweisend mindestens einen Wechselhalter (1, 3, 5) und einen Grundhalter (2, 4, 6), wobei jeder Wechselhalter (1, 3, 5) zwei Wechselhalter-Führungselemente (11, 12) aufweist, die mit Grundhalter-Führungselementen (21, 22) des Grundhalters (2, 4, 6) in Eingriff stehen, und wobei jeder Wechselhalter(1, 3, 5) einen Wechselhalter-Kühlmittelkanal (13) aufweist, welcher eine Wechselhalter-Kühlmittelkanalöffnung (131) in einem der Wechselhalter-Führungselemente (12) aufweist, welcher eine Grundhalter-Kühlmittelkanalöffnung (231) eines Grundhalter-Kühlmittelkanals (23) kontaktiert, die an einem Grundhalter-Führungselement (22) angeordnet ist
**dadurch gekennzeichnet, dass**
- erste Führungselemente, bei denen es sich entweder um die Wechselhalter-Führungselemente (11, 12) oder um die Grundhalter-Führungselemente (21, 22) handelt, einen konvexen halbkreisförmigen Querschnitt aufweisen, welcher
(i) einen abgeflachten Bereich (111) aufweist, der den Scheitelpunkt (112) des Halbkreises beinhaltet, oder
(ii) zwei aufgeweitete Bereiche (113) aufweist, welche spiegelsymmetrisch an dem Halbkreis angeordnet sind, und dass
- zweite Führungselemente, bei denen es sich um jene Führungselemente handelt, die mit den ersten Führungselementen in Eingriff stehen, einen konkaven kreissektorförmigen Querschnitt mit einem Mittelpunktswinkel (γ) von weniger als 180° aufweisen.

2. Vorrichtung nach Anspruch 1, **dadurch gekennzeichnet, dass** der abgeflachte Bereich einen Mittelpunktswinkel (α) im Bereich von 10° bis 12° aufweist.

3. Vorrichtung nach Anspruch 1, **dadurch gekennzeichnet, dass** der Mittelpunkt (114) jedes aufgeweiteten Bereiches (113) mit dem Scheitelpunkt (112) des Halbkreises einen Winkel (β) im Bereich von 40° bis 65° bildet.

4. Vorrichtung nach einem der Ansprüche 1 bis 3, **dadurch gekennzeichnet, dass**
(i) der konvexe halbkreisförmigen Querschnitt, in dem abgeflachten Bereich im Scheitelpunkt (112) des Halbkreises um eine Abflachung (a) von 4 µm bis 8 µm gegenüber der Halbkreisform abgeflacht ist, oder
(ii) der konvexe halbkreisförmige Querschnitt im Mittelpunkt (114) jedes aufgeweiteten Bereiches um eine Aufweitung (b) von 4 µm bis 8 µm gegenüber der Halbkreisform aufgeweitet ist.

5. Vorrichtung nach einem der Ansprüche 1 bis 4, **dadurch gekennzeichnet, dass** der Mittelpunktswinkel (α) des konkaven kreissektorförmigen Querschnitt im Bereich von 140° bis 144° liegt.

6. Vorrichtung nach einem der Ansprüche 1 bis 5, **dadurch gekennzeichnet, dass** sich an beiden Enden des konkaven kreissektorförmigen Querschnitts jeweils ein linearer Abschnitt (211) des Querschnitts anschließt.

7. Vorrichtung nach Anspruch 6, **dadurch gekennzeichnet, dass** der Winkel (δ) einer Verbindung des Scheitelpunkts (212) des konkaven kreissektorförmigen Querschnitts mit dem Kreismittelpunkt des Kreissektors und den linearen Abschnitten (211) jeweils im Bereich von 16° bis 20° liegt.

8. Vorrichtung nach einem der Ansprüche 1 bis 7, **dadurch gekennzeichnet, dass** mindestens eine Wechselhalter-Kühlmittelkanalöffnung (131) die Form eines Langloches hat, dessen Längsachse entlang der Längsachse seines Wechselhalter-Führungselements (12) verläuft und/oder mindestens eine Grundhalter-Kühlmittelkanalöffnung (231) die Form eines Langloches hat, dessen Längsachse entlang der Längsachse seines Grundhalter-Führungselements (22) verläuft.

9. Vorrichtung nach einem der Ansprüche 1 bis 8, **dadurch gekennzeichnet, dass** die ersten Führungselemente Wechselhalter-Führungselemente (11, 12) sind und die zweiten Führungselemente Grundhalter-Führungselemente (21, 22) sind.

10. Vorrichtung nach Anspruch 9, **dadurch gekennzeichnet, dass** die Wechselhalter (1, 3, 5) jeweils einen Datenträger (14) aufweisen, der zumindest teilweise in einem Wechselhalter-Führungselement (11) angeordnet ist, welches keine Wechselhalter-Kühlmittelkanalöffnung (131) aufweist.

11. Vorrichtung nach Anspruch 9 oder 10, **dadurch gekennzeichnet, dass** die Wechselhalter (3) jeweils zwischen ihren beiden Wechselhalter-Führungselementen eine Wechselhalter-Verbindungsöffnung (33) mit Hinterschnitt aufweisen, welche mit einem Grundhalter-Vorsprung (41) des Grundhalters (4) eingreift, der zwischen zwei Grundhalter-Führungselementen angeordnet ist, und dass die Grundhalter (4) jeweils eine Exzenterschraube (421) pro Wechselhalter (3) aufweisen, deren Schraubenkopf (422) in einer Schraubenöffnung (34) eines Wechselhalters (3) angeordnet ist und deren Schraubenschaft (423) in einer linearen Gewindeöffnung (42) des Grundhalters (4) angeordnet ist, wobei die Längsachse der Gewindeöffnung (42) in Richtung des Grundhalter-Vorsprungs (41) abgewinkelt verläuft.

12. Vorrichtung nach Anspruch 11, **dadurch gekennzeichnet, dass** ein Fixierelement (431) in einer linearen Fixierelementöffnung (43) angeordnet ist, die so durch den Grundhalter (4) und einen Wechselhalter (3) verläuft, dass sie auf der von der Gewindeöffnung (42) abgewandten Seite der Wechselhalter-Verbindungsöffnung (33) im Wechselhalter endet, wobei ihre Längsachse in Richtung des Grundhalter-Vorsprungs (41) abgewinkelt verläuft.

13. Vorrichtung nach Anspruch 9 oder 10, **dadurch gekennzeichnet, dass** die Wechselhalter (5) jeweils ein Befestigungselement (51) mit ersten Eingreifelementen (511) aufweisen, das jeweils in einem Aufnahmebereich (61) des Grundhalters (6) angeordnet ist, und dass jeweils ein Befestigungskanal (62) so durch den Grundkörper (6) verläuft, dass er in dem Aufnahmebereich (61) endet, wobei ein Befestigungsstift (621) in dem Befestigungskanal (62) angeordnet ist, der zweite Eingreifelemente (622) aufweist, die mit den ersten Eingreifelementen (511) eingreifen.

14. Vorrichtung nach Anspruch 13, **dadurch gekennzeichnet, dass** an dem dem Aufnahmebereich (61) abgewandten Ende des Befestigungsstiftes (621) ein Gewindekopf (63) mit Außengewinde in dem Befestigungskanal (62) angeordnet ist, und dass ein Federkanal (64) so in dem Grundkörper (6) angeordnet ist, dass er in dem Befestigungskanal (62) endet, wobei ein Federelement (641) so in dem Federkanal (64) angeordnet ist, dass es in eine Federöffnung (623) des Befestigungsstiftes (621) eingreift.

## Claims

1. Device for holding tools (31) for processing machines, having at least one chance holder (1, 3, 5) and a base holder (2, 4, 6), wherein each chance holder (1, 3, 5) has two chance holder guiding elements (11, 12) which are in engagement with base holder guiding elements (21, 22) of the base holder (2, 4, 6), and wherein each chance holder (1, 3, 5) has a chance holder coolant channel (13) which has a chance holder coolant channel opening (131) in one of the chance holder guiding elements (12), said chance holder coolant channel (13) contacting a base holder coolant channel opening (231) of a base holder coolant channel (23) which is arranged on a base holder guiding element (22)
**characterised in that**
- first guiding elements, which are either the chance holder guiding elements (11, 12) or the base holder guiding elements (21, 22), have a convex semi-circular cross section which
(i) has a flattened region (111) which contains the vertex (112) of the semicircle, or
(ii) two widened regions (113) which are arranged mirror-symmetrically on the semicircle, and
- second guiding elements, which are guiding elements which are in engagement with the first guiding elements, have a concave circular sector-shaped cross section having a centre angle (γ) of less than 180°.

2. Device according to claim 1, **characterised in that** the flattened region has a centre angle (α) ranging from 10° to 12°.

3. Device according to claim 1, **characterised in that** the centre (114) of each widened region (113) forms an angle (β) ranging from 40° to 65° with the vertex (112) of the semicircle.

4. Device according to one of claims 1 to 3, **characterised in that**
(i) the convex semi-circular cross section is flattened in the flattened region at the vertex (112) of the semicircle by a flattening (a) of 4µm to 8µm with respect to the semicircle, or
(ii) the convex semi-circular cross section is widened at the centre (114) of each widened region by a widening (b) of 4µm to 8µm with respect to the semicircle.

5. Device according to one of claims 1 to 4, **characterised in that** the centre angle (γ) of the concave circular sector-shaped cross section ranges from 140° to 144°.

6. Device according to one of claims 1 to 5, **characterised in that** a linear section (211) of the cross section is connected to both ends of the concave circular sector-shaped cross section in each case.

7. Device according to claim 6, **characterised in that** the angle (δ) of a connection between the vertex (212) of the concave circular sector-shaped cross section and the circle centre of the circular sector and the linear sections (211) ranges from 16° to 20° in each case.

8. Device according to one of claims 1 to 7, **characterised in that** at least one chance holder coolant channel opening (131) has the shape of an elongated hole, the longitudinal axis of which runs along the longitudinal axis of its chance holder guiding element (12) and/or at least one base holder coolant channel opening (231) has the shape of an elongated hole, the longitudinal axis of which runs along the longitudinal axis of its base holder guiding element (22).

9. Device according to one of claims 1 to 8, **characterised in that** the first guiding elements are chance holder guiding elements (11,12) and the second guiding elements are base holder guiding elements (21, 22).

10. Device according to claim 9, **characterised in that** the chance holders (1, 3, 5) have one data carrier (14) in each case which is arranged at least partially in a chance holder guiding element (11) which does not have a chance holder coolant channel opening (131).

11. Device according to claim 9 or 10, **characterised in that** the chance holders (3) each have, between their two chance holder guiding elements, a chance holder connection opening (33) with an undercut, said chance holder connection opening (33) engaging with a base holder projection (41) of the base holder (4) which is arranged between two base holder guiding elements, and the base holders (4) each have one eccentric screw (421) per chance holder (3), the screw head (422) of which being arranged in a screw opening (34) of a chance holder (3) and the screw shaft (423) of which being arranged in a linear threaded opening (42) of the base holder (4), wherein the longitudinal axis of the threaded opening (42) runs at an angle in the direction of the base holder projection (41).

12. Device according to claim 11, **characterised in that** a fixing element (431) is arranged in a linear fixing element opening (43) which runs through the base holder (4) and a chance holder (3) in such a way that it ends on the side, facing away from the threaded opening (42), of the chance holder connection opening (33) in the chance holder, wherein its longitudinal axis runs at an angle in the direction of the base holder projection (41).

13. Device according to claim 9 or 10, **characterised in that** the chance holders (5) each have one fastening element (51), having first engaging elements (511), which is arranged in a receiving region (61) of the base holder (6) in each case, and in each case one fastening channel (62) runs through the base body (6) in such a way that it ends in the receiving region (61), wherein a fastening pin (621) is arranged in the fastening channel (62) which has second engaging elements (622) which engage with the first engaging elements (511).

14. Device according to claim 13, **characterised in that** a threaded head (63) having an external thread is arranged in the fastening channel (62) on the end of the fastening pin (621) which faces away from the receiving region (61), and a spring channel (64) is arranged in the base body (6) in such a way that it ends in the fastening channel (62), wherein a spring element (641) is arranged in the spring channel (64) in such a way that it engages with a spring opening (623) of the fastening pin (621).

## Revendications

1. Dispositif de fixation d'outils (31) pour machines d'usinage, présentant au moins un support interchangeable (1, 3, 5) et un support principal (2, 4, 6), chaque support interchangeable (1, 3, 5) présentant deux éléments de guidage (11, 12) de support interchangeable qui sont en prise avec des éléments de guidage (21, 22) de support principal (2, 4, 6), chaque support interchangeable (1, 3, 5) présentant un canal d'agent de refroidissement (13) de support interchangeable qui possède une ouverture (131) de canal d'agent de refroidissement de support interchangeable pratiquée dans l'un des éléments de guidage (12) de support interchangeable et en contact avec une ouverture (231) d'un canal d'agent de refroidissement (23) de support principal, laquelle est située sur un élément de guidage (22) de support principal,
**caractérisé en ce que**
- des premiers éléments de guidage, consistant soit en les éléments de guidage (11, 12) de support interchangeable, soit en les éléments de guidage (21,22) de support principal, présentent une section transversale en forme de demi-cercle convexe qui possède :
(i) une zone aplatie (111) contenant le sommet (112) du demi-cercle, ou
(ii) deux zones élargies (113) prévues en symétrie spéculaire sur le demi-cercle ; et **en ce que**
- des deuxièmes éléments de guidage, consistant en lesdits éléments de guidage qui sont en prise avec les premiers éléments de guidage, présentent une section transversale en forme de demi-cercle concave dont l'angle au centre (γ) est inférieur à 180°.

2. Dispositif selon la revendication 1, **caractérisé en ce que** la zone aplatie présente un angle au centre (α) situé dans la plage allant de 10° à 12°.

3. Dispositif selon la revendication 1, **caractérisé en ce que** le point central (114) de chaque zone élargie (113) forme un angle (β) situé dans la plage allant de 40° à 65° avec le sommet (112) du demi-cercle.

4. Dispositif selon l'une des revendications 1 à 3, **caractérisé en ce que**
(i) la section transversale en forme de demi-cercle convexe est aplatie, dans la zone aplatie, au sommet (112) du demi-cercle, selon un aplatissement (a) allant de 4 µm à 8 µm par rapport à la forme de demi-cercle, ou
(ii) la section transversale en forme de demi-cercle concave est élargie, au point central (114) de chaque zone élargie, selon un élargissement (b) allant de 4 µm à 8 µm par rapport à la forme de demi-cercle.

5. Dispositif selon l'une des revendications 1 à 4, **caractérisé en ce que** l'angle au centre (γ) de la section transversale en forme de secteur de cercle concave est situé dans la plage allant de 140° à 144°.

6. Dispositif selon l'une des revendications 1 à 5, **caractérisé en ce qu'**une partie linéaire (211) respective de la section transversale est directement contiguë aux deux extrémités de la section transversale en forme de secteur de cercle concave.

7. Dispositif selon la revendication 6, **caractérisé en ce que** l'angle (δ) respectif formé en reliant le sommet (212) de la section transversale en forme de secteur de cercle concave avec le centre du secteur de cercle et les parties linéaires (211) est situé dans la plage allant de 16° à 20°.

8. Dispositif selon l'une des revendications 1 à 7, **caractérisé en ce qu'**au moins une ouverture (131) de canal d'agent de refroidissement de support interchangeable a la forme d'un trou oblong dont l'axe longitudinal est orienté le long de l'axe longitudinal de son élément de guidage (12) de support interchangeable et/ou **en ce qu'**au moins une ouverture (231) de canal d'agent de refroidissement de support principal a la forme d'un trou oblong dont l'axe longitudinal est orienté le long de l'axe longitudinal de son élément de guidage (22) de support principal.

9. Dispositif selon l'une des revendications 1 à 8, **caractérisé en ce que** les premiers éléments de guidage sont des éléments de guidage (11, 12) de support interchangeable et les deuxièmes éléments de guidage sont des éléments de guidage (21, 22) de support principal.

10. Dispositif selon la revendication 9, **caractérisé en ce que** les supports interchangeables (1, 3, 5) présentent chacun un support de données (14) disposé au moins en partie dans un élément de guidage (11) de support interchangeable ne présentant pas d'ouverture (131) de canal d'agent de refroidissement de support interchangeable.

11. Dispositif selon la revendication 9 ou 10, **caractérisé en ce que** les supports interchangeables (3) présentent chacun, entre leurs deux éléments de guidage, une ouverture de liaison (33) de support interchangeable pourvue d'une contre-dépouille, laquelle ouverture de liaison est en prise avec une saillie (41) du support principal (4) disposée entre deux éléments de guidage du support principal, et **en ce que** les supports principaux (4) présentent chacun une vis excentrique (421) par support interchangeable (3) dont la tête (422) est disposée dans une ouverture pour vis (34) d'un support interchangeable (3) et dont la tige (423) est disposée dans une ouverture taraudée (42) linéaire du support principal (4), l'axe longitudinal de l'ouverture taraudée (42) étant incliné en direction de la saillie (41) de support principal.

12. Dispositif selon la revendication 11, **caractérisé en ce qu'**un élément de fixation (431) est disposé dans une ouverture pour élément de fixation (43) linéaire qui traverse le support principal (4) et un support interchangeable (3) de manière à déboucher sur le côté, détourné de l'ouverture taraudée (42), de l'ouverture de liaison (33) qui est pratiquée dans le support interchangeable, l'axe longitudinal de l'ouverture pour élément de fixation étant incliné en direction de la saillie (41) de support principal.

13. Dispositif selon la revendication 9 ou 10, **caractérisé en ce que** les supports interchangeables (5) présentent chacun un élément de fixation (51) pourvu de premiers éléments de mise en prise (511) et disposé dans un logement (61) respectif du support principal (6), et **en ce qu'**un canal de fixation (62) respectif est pratiqué dans le corps principal (6) de manière à déboucher dans le logement (61), une tige de fixation (621) étant disposée dans le canal de fixation (62) présentant des deuxièmes éléments de mise en prise (622) venant en prise avec les premiers éléments de mise en prise (511).

14. Dispositif selon la revendication 13, **caractérisé en ce qu'**une tête filetée (63) à filetage extérieur est disposée dans le canal de fixation (62) au niveau du côté de la tige de fixation (621) qui est détourné du logement (61), et **en ce qu'**un canal pour ressort (64) est pratiqué dans le corps principal (6) de manière à déboucher dans le canal de fixation (62), un élément de ressort (641) étant disposé dans le canal pour ressort (64) de manière à venir en prise dans une ouverture pour ressort (623) de la tige de fixation (621).
